# EUROPEAN PATENT APPLICATION

(11) **EP 2 664 657 A1**
(43) Date of publication of application: **20.11.2013**
(21) Application number: 12168254.6
(22) Date of filing: 16.05.2012
(51) Int. Cl.: C09C 1/42, C09C 3/00, C09C 3/04, C09C 3/08, C09C 3/10, C08K 9/04

(54) **Multistep process for obtaining modified inorganic particles**

(71) Applicant: Borealis Agrolinz Melamine GmbH, 4021 Linz (AT)
(72) Inventor: Dicke, René, 4060 Leonding (AT); Rot, Katarina, 4060 Leonding (AT)
(74) Representative: Morawski, Birgit

(57) **Abstract**

The present invention relates to a multistep process for obtaining modified inorganic particles having a layered structure, characterized by the steps of a) Providing an aqueous solution or suspension comprising at least one first amino compound in a first vessel T1 and protonating the at least one first amino compound using at least one acid; b) Providing an aqueous homogenous suspension comprising at least one inorganic particle having a layered structure in a second vessel T2; c1) addition of the aqueous solution or suspension of the at least one first protonated amino compound from the first vessel T1 to the aqueous homogenous suspension comprising at least one inorganic particle having a layered structure in the second vessel T2; c2) Addition of at least one second non-protonated amino compound to the suspension obtained in step c1); d) Addition of at least one aldehyde to the homogenous suspension of the at least one inorganic particle being modified by the first protonated amino compound and second non-protonated amino compound in the second vessel T2; and e) removal and work up of the modified inorganic particles. The present invention relates also to modified inorganic particles obtained in this multistep process and their use.

## Description

The present invention relates to a process for obtaining modified inorganic particles according to the preamble of claim 1, modified inorganic particles according to claim 12 and their use according to claim 15.

Inorganic particles having a layered structure and being modified are known.

For instance, Hayashi et al. (Solid state sciences, 2009, 11: 1007-1015) describes the intercalation of melamine into layered zirconium phosphates and the ability of these modified particles to adsorb formaldehyde in gas and solution phase.

In WO 2002/048248 A1 inorganic particles having a layered structure are described, which were modified by using different amino compounds such as melamine, urea or guanidine for cation exchange and as intercalating agent.

These modified inorganic particles can be applied as aldehyde scavenger, in particular a formaldehyde scavenger, and/or at the same time as curing agent for aldehyde based resins, respectively glues or adhesives for manufacturing of wood based panels having an improved performance as described in WO 2011/110536 A1.

According to the teaching of WO 2002/048248 A1 the modified inorganic particles having a layered structure are synthesized in lab scale in a one pot synthesis. All raw materials such as amino compound, inorganic particle, and acid are put together in one vessel followed by an aldehyde which is added to the mixture. One disadvantage of such a one pot approach is an insufficient swelling time of the layered particles. A further disadvantage is that the viscosity of the mixture cannot be sufficiently controlled. However, an uncontrolled viscosity increase is a major problem for carrying out the reaction in a technical larger scale specifically in a stirring vessel. In addition the solid content is limited due to the problem of viscosity. A further disadvantage of a one-pot synthesis is that the addition of the free acid to the mixture comprising the inorganic layered particles such as layered silicate particles like MMT also causes an ion exchange of sodium against hydrogen within the particle. Such a hydrogen containing layered silicate is however not stable and may transform into other silicate types.

It is therefore an object of the present invention to provide a process which allows for the synthesis of modified inorganic particles on a large scale in a shorter time, wherein the viscosity is reduced and thus homogeneity of the reaction mixture is improved.

This object is being solved by providing a multistep process having the features of claim 1 or claim 2.

Accordingly, in a first variant a multistep process for obtaining modified inorganic particles having a layered structure is provided, wherein the inorganic particles are modified in particular by cation exchange and intercalation. The multistep process comprises the steps of
a) Providing an aqueous solution or suspension comprising at least one first amino compound in a first vessel and protonating the at least one first amino compound by using at least one acid;
b) Providing an aqueous homogeneous suspension comprising at least one inorganic particle having a layered structure in a second vessel;
c1) addition of the aqueous solution or suspension of the at least one first protonated amino compound from the first vessel to the aqueous homogeneous suspension comprising at least one inorganic particle having a layered structure in the second vessel;
c2) Addition of at least one non-protonated second amino compound to the suspension obtained in step c1);
d) Addition of at least one aldehyde to the homogeneous suspension of the at least one inorganic particle being modified by the first protonated amino compound and the second non-protonated amino compound in the second vessel; and
e) removal and work up of the modified inorganic particles.

The multistep process according to the first variant of the invention comprises the steps of providing a protonated, and thus positively charged first amino compound in one first vessel; providing swollen inorganic particles in a separate second vessel; mixing the protonated first amino compound and the swollen inorganic particle; adding a second non-protonated amino compound to the mixture of protonated first amino compound and swollen inorganic particles; adding an aldehyde to the mixture of protonated first amino compound, non-protonated second amino compound and inorganic particles followed by a suitable work up of the thus obtained modified particles, wherein the work up preferably does not require any washing step.

The present multistep process according to the first variant comprises thus at least two independent steps of preparing a first protonated amino compound in one vessel in a first step by using a suitable acid and swelling the layered inorganic particles in another separate vessel in a second step. Only after sufficient swelling of the layered inorganic particles in the second vessel the two separate suspensions of acidified or protonated first amino compound and of the swollen layered inorganic particles are mixed together in a controlled manner.

Also a second variant of the multistep process for obtaining modified inorganic particles solves the object of the present invention, wherein this second variant of the process comprises the steps of:
a1) Providing an aqueous solution or suspension comprising at least one first amino compound in a first vessel and protonating the at least one first amino compound by using at least one acid;
a2) Addition of at least one non-protonated second amino compound to the solution/suspension obtained in step a1);
b) Providing an aqueous homogeneous suspension comprising at least one inorganic particle having a layered structure in a second vessel;
c1) addition of the aqueous solution or suspension from the first vessel comprising the first protonated amino compound and the second non-protonated compound to the aqueous homogeneous suspension comprising at least one inorganic particle having a layered structure in the second vessel;
d) Addition of at least one aldehyde to the homogeneous suspension of the at least one inorganic particle being modified by the first protonated amino compound and the second non-protonated amino compound in the second vessel; and
e) removal and work up of the modified inorganic particles.

The multistep process according to the second variant of the present process comprises the steps of providing a protonated, and thus positively charged first amino compound in one first vessel; adding a second non-protonated amino compound to the mixture of protonated first amino compound; providing swollen inorganic particles in a separate second vessel; mixing the protonated first amino compound as well as a second non-protonated amino compound and the swollen inorganic particle; adding an aldehyde to the mixture of protonated first amino compound, non-protonated second amino compound and inorganic particles followed by a suitable work up of the thus obtained modified particles, wherein the work up preferably does not require any washing step.

The present multistep process of the second variant comprises thus at least two independent steps of preparing a first protonated amino compound in one vessel in a first step and swelling the layered inorganic particles in another separate vessel in a second step. Only after sufficient swelling of the layered inorganic particles in the second vessel the suspension of acidified or protonated first amino compound and non-protonated second amino compound and of the swollen layered inorganic particles are mixed together in a controlled manner.

One advantage of the present process is that the addition of the protonated first amino compound to the suspension of layered inorganic particles can be carried out in a manner such that the viscosity increase during the cation exchange in the layered inorganic particles can be controlled in the second vessel.

A further advantage is that the formation of the salt consisting of the at least first amino compound and the at least one acid in the first vessel binds the free acid. Thus, the free acid with its strong acid ph value does not destroy inorganic particles during addition to the second vessel. For instance when using silicates as inorganic particles the formation of silicic acid would occur at an acidic pH value and thus the layered structure of the silicates would be destroyed and the particles would not be any longer available for the process purpose.

When the first protonated amino compound is mixed with the swollen inorganic particles, cation exchange is promoted within the layered inorganic particles. The layered inorganic particles such as silicates contain usually cations such as Na⁺ cations. These exchangeable cations are replaced by the cations of the first amino compound in the course of the process in step c1) e.g. the native cations are replaced by cations of first amino compound, as depicted in the following reaction scheme I as an example.

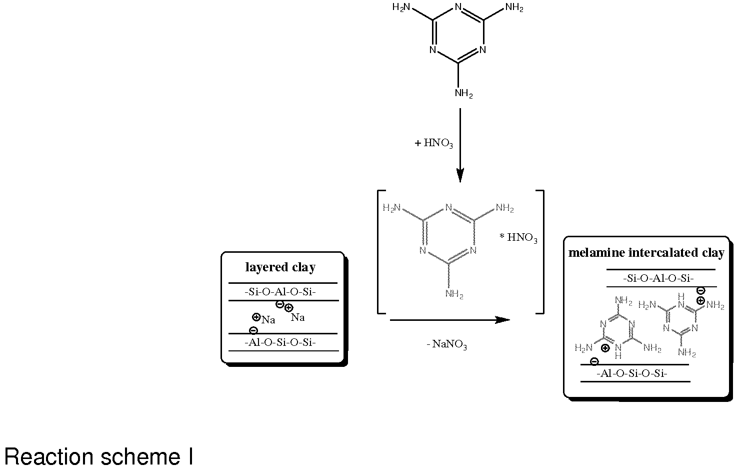

When adding a second non-protonated amino compound in step c2) according to the first variant to the mixture of protonated first amino compound and inorganic particles the second uncharged non-protonated amino compound is intercalated between the layers of the inorganic particles, which have already been widened by the cation exchange using the first charged amino compound, as shown in above scheme I.

The same mechanism takes place in the second variant of the invention wherein the non-protonated second amino compound, which is already present in the mixture, is intercalated between the layers of the inorganic particles which have been widened by the first protonated amino compound.

The second amino compound can be either the same as the first amino compound or can be different from the first amino compound. In any case, the second amino compound is preferably selected from the same class of compounds as the first amino compound described further below. It is further conceivable to use different amino compounds as second amino compound. For instance two or more different non-protonated amino compounds may be used as second amino compound.

By adding at least one aldehyde to the mixture of first protonated amino compound, second non-protonated amino compound and swollen inorganic particles in step d) the aldehyde reacts with any of the first and second amino compound in a condensation reaction providing an amino-aldehyde-condensate such as amino-aldehyde-oligomer or polymer.

The aldehyde is preferably added in a slow, controlled manner to the reaction mixture, e.g. in a time period of at least 30 min and up to over an hour. This slow, controlled aldehyde addition allows a complete reaction of the aldehyde with any one of the amino compounds in particular on the surface and the outer area of the layers of the inorganic particles. The amino compounds within the core of the inorganic particles do not react with the aldehyde.

As mentioned, due to the complete reaction in particular on the particle surface the corresponding amino-aldehyde-condensate is preferably formed at the outer edges of the layers of the inorganic particles, but preferably not further inside in the core of the layers. This is due to the fact that the aldehyde reacts very fast with the amino compound at a specific pH level in the process and forms immediately amino-aldehyde-condensate due to the slow and controlled addition of the aldehyde to the reaction mixture.

This in turn also means that in particular a mixture of first protonated amino compound, the anion of the acid used in step a) for protonating the first amino compound as well as second non-protonated amino compound are located within the inorganic particles.

The modified inorganic particles obtainable by the process of the invention comprise thus preferably protonated amino compounds with the respective acid anion as counter ion and non-protonated amino compounds in the particle core and a mixture of amino-aldehyde-condensate or aminoplast and silicate as an outer coat as measured by XRD techniques.Preferably no outer shell of aminoplast is formed.

Besides these compounds the salt of exchanged cations of the layered inorganic particles such as alkali and alkaline earth cations etc. and acid anions used for protonating the first amino compound may also be present within the modified particle layers or within the condensate coating of the particles, in particular if a washing step is avoided during the particle work up.

Thus, if a washing step is omitted during the work up step e) even further modified inorganic particles of the following composition are obtained:
- a salt comprising native cations such as alkali metal, alkaline earth metal, aluminium, iron and/or manganese cations of the layered inorganic particles and anions of the acid used in step a) for protonating the first amino compound such as nitrate or others;
- protonated first amino compound which in particular serves as counter cation for the free anions of the layered inorganic particles ;
- a salt comprising protonated first amino compound as cation and anions of the acid used in step a) for protonating the first amino compound such as nitrate or others; and
- intercalated non-protonated second amino compound.

The thickness of the outer condensate such as polymer coat may be controlled by the amount of aldehyde such as formaldehyde added and the way said aldehyde is added to the reaction mixture. For instance, by adding formaldehyde in a controlled manner formaldehyde reacts quickly with one of the amino compounds. If formaldehyde is added however in one step in an uncontrolled manner formaldehyde is able to enter the particle core.

As described above process step a) provides for the formation of a cation of the first amino compound by using at least one suitable acid, i.e. in particular at least one N-atom such as in case of an amino group or triazine ring is protonated and carries thus a positive charge.

In an embodiment of the present process the first amino compound is added in process step a) to the aqueous solution having a temperature between 60 to 100°C, preferably 70 to 90°C, most preferably 80°C.

It is also preferred in the present process that during the addition of the first amino compound to the water, in process step a) a viscosity between 0.1 to 100 mPas/80°C, preferably 0.2 to 80 mPas/80°C, most preferably 0.2 to 60 mPas/80°C is obtained.

The concentration of the first amino compound in the aqueous solution varies and depends on the amino compound used, in particular on the water solubility of the amino compound.

For example when using melamine a suspension can be obtained with a melamine content of 5-10 mass%, preferably 8 mass% due to the relatively low water solubility of melamine. If on the other hand a more water soluble amino compound such as urea is being used a much higher concentration of the first amino compound in the aqueous solution is possible such as 15 mass% and higher.

In a further variant of the present process, in particular of process step a) the acid is added within a time range between 2 to 10 min, preferably 3 to 8 min, most preferably 4 to 7 min.

By adding an acid the pH value in the first vessel is adjusted to a range of 0 to 8. It has to be noted that the pH vessel obtained in the first vessel depends strongly on the amino compound used e.g. from the number of N-atoms like amino groups within this compound and also from the type and amount of acid used.

It is for instance preferred if the amino compound and the acid are used in a molar ratio of 1:1.

The suspension of the protonated first amino compound is further stirred for a time period of 20 to 40 min, preferably 30 min.

The main reaction in the first vessel in step a) is the neutralisation of the first amino compound by a suitable acid and formation of the corresponding salt of the first amino compound. This neutralisation reaction is accompanied by the formation of complexes of the first protonated amino compound and the corresponding acid anion, e.g. [amino compound H]⁺ [acid anion]⁻.

Suitable first amino compounds may be polyfunctional C₁-C₃₀ amino compounds of the type consisting of heterocyclic compounds, triazines, triazine derivatives such as benzoguanamine, acetoguanamine, urea, urea derivatives, cyanamide, dicyandiamide, sulphonamides guanidine, guanidine derivatives, aliphatic linear or branched amines and/or aromatic amines such as aniline.

The triazine derivatives optionally used as first amino compound are preferably melamines, diaminomethyltriazines and/or diaminophenyltriazines substituted by hydroxy-C₁-C₁₀-alkyl groups, hydroxy-C₁-C₁₀-alkyl(oxa-C₂-C₄-alkylk)₁₋₅ groups and/or by amino-C₁-C₁₂-alkyl groups, preferably 2-(2-hydroxyethylamino)-4,6-diamino-1,3,5-triazine, 2-(5-hydroxy-3-oxapentylamino)-4,6-diamino-1,3,5-triazine, 2,4,6-tris(6-aminohexylamino)-1,3,5-triazine and/or 2,4-(di-5-hydroxy-3-oxapentylamino)-6-methyl-1,3,5-triazine, ammeline, ammelide, melem, melon and/or melam.

Possible urea derivatives are thiourea, biuret and urea or thiourea substituted by C₁-C₁₀-alkyl groups, C₆-C₁₄-aryl groups, hydroxy-C₁-C₁₀-alkyl groups, hydroxy-C₁-C₄-alkyl(oxa-C₂-C₄-alkyl)₁₋₅ groups and/or by amino-C₁-C₁₂-alkyl groups.

The guanidine derivatives optionally forming an interlamellar content in the modified inorganic particles are biguanides, preferably 1-(*o*-tolyl)-biguanide.

Suitable amines are for instance hydrazines, aromatic amines, aromatic diamines, aminobenzoic acid and its derivatives, 2-amino-2-methyl-1-propanol, urethanes, allylamines, imidazol and others. Suitable amino acids are for instance arginine, lysine or asparagine. Proteins containing asparagine, arginine and lysine, in particular casein, gelatin, gluten, whey protein, soy protein, collagen or amino group containing polymers like poly(vinyl)amine, 3-aminopropylvinylether, 3-aminopropylmethacrylat, 2-aminoethylmethacrylat, 4-aminobutylmethacrylat, 5-aminopentylmethacrylat, 3-aminopropylacrylat, 2-aminopropylacrylat, 4-aminobutylacrylat, 5-aminopentylacrylat, 2-aminoethylvinylether, 4-aminobutylvinylether and/or 5-aminopentylvinylether can be used. Suitable amides are amongst others for instance caprolactam, hydantoin, polyamides, nylon and derivatives thereof.

Suitable acids which can be applied in process step a) are inorganic, organic or Lewis acids. Suitable inorganic acids are for instance HCl, H₂SO₄, H₂SO₃, H₃PO₄, HNO₃ or HClO₄. Organic acids can be acetic acid, oxalic acid, p-toluenesulfonic acid or adipic acid. Typical Lewis acids may be AlCl₃, FeCl₃, Al(OH)₃. The use of HNO₃, H₂SO₄, H₃PO₄ is however preferred and the use of HCl may not be applicable under certain conditions and may thus be exempted.

Acids having a buffer function, such as citric acid, acetic acid and/or phosphoric acid, or acidic salts having a buffer function, such as sodium hydrogen phosphate or potassium hydrogen phosphate, may also preferably be used.

In process step b) a suspension of the inorganic particles having a layered structure is provided in a second vessel, thus in a vessel separate from the first vessel.

In an embodiment of the present process, in particular of process step b) the inorganic particles having a layered structure are added to water in process step b) until a final viscosity of the suspension between 3000 to 10.000 mPas/75°, preferably 5000 to 8000 mPas/75°C, most preferably 6000 to 7000 mPas/75°C is reached.

It is preferred, if the water used in step b) is heated to a temperature between 60 to 100°C, preferably 70 to 100°C, most preferably 80°C to 100°C. The increased temperature allows for an improved and faster swelling of the inorganic particles and a reduction of process viscosity.

The addition of inorganic particles having a layered structure to the aqueous solvent and swelling of the inorganic particles provides a stable suspension having a pH value between 9 and 11. Depending on swelling behaviour the inorganic particles need however some time to reach a stable suspension. The stirring speed has to be controlled in such a way that the wet inorganic particle cannot dry at the reactor wall.

In step b) in the second vessel preferably a hydratisation of the inorganic particles takes place. The layered inorganic particles such as montmorillonite swell in the aqueous solvent. This means the distance between the layers of this inorganic particle increases due to formation of the hydrate shell on the exchangeable ions between these layers.

Suitable inorganic particles having a layer structure are, for example, silicates, phosphates, arsenates, titanates, vanadates, niobates, molybdates and/or manganates, in particular sheet silicates of the type consisting of montmorillonite, bentonite, kaolinite, muscovite, hectorite, fluorohectorite, canemite, revdite, grumantite, ilerite, saponite, beidelite, nontronite, stevensite, laponite, taneolite, vermiculite, halloysite, volkonskoite, magadite, rectorite, halloysite, kenyaite, sauconite, borofluorophlogopites and/or synthetic sheet silicates, the sheet silicates furthermore particularly preferably being sheet silicates having exchangeable cations of the type consisting of alkali metal, alkaline earth metal, aluminum, iron and/or manganese cations.

Examples of suitable phosphates having a layer structure are compounds of the formula H₂[M^{IV}(PO₄)₂].ₓH₂O (M^{Iv} = Zr, Ti, Ge, SN, Pb) and CaPO₄R·H₂O (R = CH₃; C₂H₅).

Examples of suitable arsenates having a layer structure are compounds of the formula H₂[M^{IV}(AsO₄)₂].ₓH₂O and H[Mn(AsO₄)₂].ₓH₂O. Examples of suitable titanates having a layer structure are compounds of the formula Na₄Ti₈O_{2O}.ₓH₂O and K₂Ln₂Ti₃O₁₀ₓH₂O.

Synthetic sheet silicates are obtained, for example, by reacting natural sheet silicates with sodium hexafluorosilicate.

Particularly preferred sheet silicates are those whose layers have an interlayer spacing of about 0.4 nm to 1.5 nm.

In process step c1) the protonated first amino compound and the inorganic particle suspension are mixed for cation exchange as described previously.

In an embodiment of the present process, in particular of process step c1), the addition of the aqueous solution containing the first amino compound from the first vessel to the aqueous homogeneous suspension of inorganic particles in the second vessel in step c1) is carried out stepwise or with a low continuous flow rate. Preferably the solution of the first amino compound is added to the second vessel containing the inorganic particles using a flow rate of 1 to 10 kg / min, preferably 2 to 8 kg / min, in particular preferably 3 to 6 kg/min, preferably such that the viscosity range in the vessel T2 is kept at value between 3000 to 10.000 mPas/75°, preferably 5000 to 8000 mPas/75°C, most preferably 6000 to 7000 mPas/75°C

In a variant of process step c1) the addition of the aqueous solution containing the first amino compound from the first vessel to the homogeneous suspension of inorganic particles in the second vessel is carried out such that the viscosity does not exceed an value of 10.000 mPas, preferably 8.000 mPas at any given time during addition of the aqueous solution/suspension of the at least one first amino compound.

The addition of the first protonated amino compound is carried out in a controlled manner that means that dosage, time and temperature of the addition process are chosen such that the viscosity of the obtained suspension remains moderate.

It is furthermore preferred, if the addition of the aqueous solution/suspension containing the first protonated amino compound from the first vessel to the aqueous homogeneous suspension of inorganic particles in the second vessel in process step c1) is carried out over a time period of 5 to 30 min, preferably 10 to 20 min, preferably such that the viscosity range in the vessel T2 is kept at value between 3000 to 10.000 mPas/75°C, preferably 5000 to 8000 mPas/75°C, most preferably 6000 to 7000 mPas/75°C. When mixing the two solutions or suspensions the viscosity in the second vessel thus increases only slightly to a maximum value of about 10.000 mPas.

In order to prevent an even stronger viscosity increase the mixing may take place stepwise or with a low flow rate, since the viscosity increase may be strongly influenced by the amount of first protonated amino compound added to the inorganic particle suspension. Since the first protonated amino compound is preferably added to the inorganic particle suspension, a low flow rate of 1 to 10 kg / min, preferably 2 to 8 kg / min, in particular preferably 3 to 6 kg/min within a time period of 10 min provides a moderate viscosity change which can be handled by conventional mixing devices.

After completing the addition of the first protonated amino compound to the inorganic particle suspension and thorough mixing the viscosity of the final suspension in the second vessel is in a range between 10 to 500 mPas/75°C, preferably 10 to 300 mPas/75°C.

At that point the mixture in the second vessel may be stirred for additional 30 to 120 min, preferably 40 to 90 min, most preferably 50 to 60 min.

The amount of protonated first amino compound added to the suspension of inorganic layered particles may be defined by the ion exchange capacity of the inorganic particles such as layered silicate particles as MMT. In general the first protonated amino compound is added in excess to the ion exchange capacity of the inorganic particles. The protonated first amino compound is added in 0.5 to 3 time excess, preferably 1.5 to 2.5 times excess in respect to the ion exchange capacity of the inorganic layered particle.

In the subsequent step c2) a second non-protonated amino compound is added to the suspension obtained is step c1).

The amount of non-protonated second amino compound added to the suspension of inorganic layered particles and first protonated amino compound may vary between 0.2 : 1 to 2 : 1 mass equivalents, preferably 0.9 : 1 to 1.1 :1 in respect to the amount of inorganic layered particles.

In process step d) a suitable aldehyde is added to the suspension obtained in step c2).

In an embodiment of process step d) the addition of the at least one aldehyde occurs over a time period of 30 to 120 min, preferably 40 to 80 min, most preferably 50 to 70 min.

In a further variant of process step d) the reaction mixture obtained is further stirred for a time period of 60 min to 240 min, preferably 90 min to 210 min, most preferably 120 min to 180 min at a temperature between 60 to 100°C, preferably at 80°C to 100°C. This allows for a completion of the condensation reaction of the aldehyde and the first and/or second amino compound.

The aldehyde solution is preferably added stepwise to the suspension of step c) for instance over a time period of 60 min, during which the reaction of the at least one aldehyde and the first amino compound and/or second amino compound intercalated into the at least one inorganic particle is completed as described above

The viscosity of the reaction mixture in step d) may be between 20 to 100 mPas, preferably 30 to 90 mPas, most preferably 30 to 80 mPas at 75°C.

The aldehyde such as formaldehyde is added to reaction mixture in step d) in an amount with a molar ratio of 0.2 to 0.5, preferably of 0.2 to 0.4, most preferably of 0.2 to 0.3 in respect to the number of amino groups of the second non-protonated amino group. If dialdehydes are used half of the amount is used.

Suitable aldehydes used in the preparation of the modified inorganic particles are C₁-C₁₀-aldehydes, preferably formaldehyde, acetaldehyde, trimethylolacetaldehyde, acrolein, benzaldehyde, furfurol, glyoxal, glutaraldehyde, phthalaldehyde and/or terephthalaldehyde, particularly preferably formaldehyde. It is also conceivable to use a mixture of above aldehydes, wherein a combination of two different aldehydes is preferred.

In the final reaction step e) the modified inorganic particles are removed from the suspension and subsequently undergo different conditioning schemes.

In an embodiment of process step e) the modified inorganic particles are filtered and dried, preferably in a combined filtration drying step, after removal from the reaction mixture.

In a most preferred embodiment of the present process the modified inorganic particles are not washed for removing excess of any of the reaction substances. Thus, in contrast to the conventional process, which include a washing step in order to remove in particular any excess of acid anions like chloride ions, the present process does not require a washing step; the washing step is omitted. The present process provides thus modified inorganic particles which still may comprise the salts of the first protonated amino compound and acid anion which in turn may have an additional impact as hardener of glues.

By omitting the washing process the overall process for obtaining modified inorganic particles is simplified and shortened. This in turn reduces the overall production costs for the modified inorganic particles.

Before transferring the final suspension containing the modified inorganic particles to a suitable filtration unit the suspension has preferably to be homogenised.

The filtration unit may be a membrane filter press comprising 5 to 15 chambers, preferably 10 chambers. The suspension material can be pumped into the filtration unit using a self-priming pump. The filtration pressure may be between 3 to 6 bar, preferably 5 to 5.5 bar for a time period of 3 to 10 min, preferably 3 to 8 min, most preferably of 5 min.

A subsequent dewatering of the filtration membrane in order to reactivate the membrane after usage may also be carried out for 5 min at a pressure of 5.5 bar.

Also other filtration types are possible, for instance Rosenmund pressure filter, filter centrifuge, centrifugation or pressure strainer. The efficiency of each filtration depends on the particle formation process to form an inorganic-organic hybrid material. If the content of non-reacted inorganic material is too high, then the filtration step may be disrupted due to the formation of an inorganic particle sheet on the filtration material.

It is preferred to apply multiple filtrations steps; for instance up to 8, preferably up to 5 filtrations can be carried out.

After filtration no additional washing step of the modified inorganic particles is required as previously mentioned. The filtered suspension of modified inorganic particles has a solid content of about 25% and can be simply stored in suitable containers such as simple PE bags.

The filtered suspension may be subsequently dried and grinded. Different drying methods are possible for drying the wet modified inorganic particles. The preferred method is the use of a Turbo-rotor system, which leads to a dry and also grinded product. The drying is done using hot air (Inlet temperature is 250°C and outlet 150°C). The residence time of the product in the dryer is lower than 1sec due to the continuous mode of operation. Advantage of this specific drying method is that the grinding step can be omitted.

Other drying steps or dryers are also applicable. For example it is possible to use dryers wherein the product is arranged on movable surface like belt dryers or dryers wherein the product is moved by a suitable drying medium such as fluidised-bed dryer or conveying dryer with the temperatures as mentioned bellow.

Drying in a drying oven can be done by using a temperature programme starting with 100° C resulting in 70° C for final drying. The dried product has preferably to be grinded in order to achieve a uniform product quality. For the product it is generally recommended that the contact time at temperatures higher than 100°C is short.

The resulting process waste water may contain small amounts of unreacted acid, first and second amino compound or their salts as well as the salt of the exchanged ions of the inorganic particle such as sodium nitrate. Aldehyde such formaldehyde is present in the waste stream only in negligible amount of lower than 0.06%. The waste water may be recycled and may be used as process water without requiring any additional cleaning steps.

The present multistep process for obtaining modified inorganic particles comprises a number of different technological changes in contrast to the conventional one pot (one step) synthesis.
- The sequence change of adding the raw materials, in particular the step wise addition of the raw materials like the cationic protonated amino compound controls the viscosity in the mixing step, i.e. the addition of the raw materials depends on the viscosity change.
- By increasing the amount of aldehyde added to the suspension of inorganic particles intercalated with amino compounds, in particular the formaldehyde amount, an improved particle formation is possible. Improved particle formation means in the context of the application that the particles comprise a more closed outer shell by a resin oligomer or polymer. Furthermore, the filtration time can be shortened as well as the drying step which usually depends on the water retention value of the modified inorganic particles.

- By changing the type of aldehyde used and the amino compounds used for ion exchange the balance between hydrophoby and hydrophility can be increased what in turn shortens filtration time and drying step.
- By increasing the temperature of the inorganic particle suspension before adding the cationic first amino compound, the process viscosity is decreased; the overall reaction time can be reduced as well as the filtration time.
- By omitting the step of washing the modified inorganic particles after their removal from the reaction mixture in vessel T2 the overall process is simplified and the process costs are reduced.

The modified inorganic particles obtainable in the process according to the invention are characterized in that the particles comprise interlamellar at least one first protonated amino compound, at least one second non-protonated amino compound and at least one anion of the acid used for protonating the first amino compound. The present modified inorganic particles comprise further an amino-aldehyde-condensate such as oligomer or polymer formed by the reaction of at least one of the first and/or second amino compound with at least one aldehyde. This amino-aldehyde condensate is located in the outer part of the inorganic particles layers and/or as a thin coat on the inorganic particle surface. The amino-aldehyde-condensate forms a kind of barrier for the interlamellar content of the inorganic particles, such that the interlamellar content, in particular the interlamellar organic content, remains or is even trapped within the inorganic particles.

In a variant the modified inorganic particles comprise an interlamellar content of at least first protonated amino compound, at least one second non-protonated amino compound and at least one anion of the acid used for protonating the first amino compound, wherein the at least one anion is selected from the group comprising nitrate, sulphate, hydrogensulphate, sulphite, phosphate, hydrogenphosphate, dihydrogenphosphate, acetate, oxalate, mono-oxalate, adipate, mono-adipate, toluene sulphonate, wherein nitrate is particularly preferred. Chloride may be thereby exempted as an anion.

In a particular preferred embodiment the modified inorganic particles comprise an interlamellar content of urea as first protonated amino compound, melamine as second non-protonated amino compound, nitrate as counterion for the protonated urea, and melamine-formaldehyde-condensate and melamine-urea-formaldehyde-condensate as barrier for the interlamellar content.

In a further embodiment the modified inorganic particles obtainable by the above described process, in particular if a washing step of the modified inorganic particles is omitted, comprise
- a salt comprising native cations such as alkali metal, alkaline earth metal, aluminium, iron and/or manganese cations of the layered inorganic particles and anions of the acid used in step a) for protonating the first amino compound such as nitrate or others;
- protonated first amino compound which in particular serves as counter cation for the free anions of the layered inorganic particles ;
- a salt comprising protonated first amino compound as cation and anions of the acid used in step a) for protonating the first amino compound such as nitrate or others; and
- intercalated non-protonated second amino compound.

According to the above embodiments the non-protonated second amino compound such as melamine is trapped within the inorganic particles. This has the advantage that when using the modified inorganic particles in glues which are for instance used for the production of wood panels the hardening of said glue is not hampered by said amino compound such a melamine. A further advantage is that the second amino compound such as melamine can serve as aldehyde scavenger.

The particle size of the present modified inorganic particles is larger than 350µm, preferably in a range between 5 µm and 250 µm, in particular preferably between 10 and 150 µm.

The enclosed salt of the first protonated amino compound and acid anion such as urea nitrate as well as the enclosed protonated first amino compound can also serve as hardener since when heating the particles such as during a pressing and curing step during the production of wood panels the enclosed salt and/or the enclosed protonated first amino compound is deprotonated and the released acid serves as hardener for the glue applied during the wood panel production. This additional effect for hardening glues gives the opportunity to reduce the amount of traditional hardener in the production of wood based panels.

The modified inorganic particles obtained in a multistep process according of the invention can be used for instance as aldehyde scavenger, as curing agent for different glues, such as formaldehyde glues like aminoplast-formaldehyde glues, in particular melamine-formaldehyde, urea-formaldehyde or melamine-urea-formaldehyde glues, or phenolformaldehyde glues, as modifier for wood based panels but also as additives for thermoplastic or thermoset compounds, in particular polyolefines, for improving their general properties.

The invention is explained in more details by the means of the following figures and examples. It shows:
- Figure 1: a reaction scheme of a first embodiment of the present process,
- Figure 2: a reaction scheme of a second embodiment of the present process, and
- Figure 3: a reaction scheme of a further embodiment of the present process.

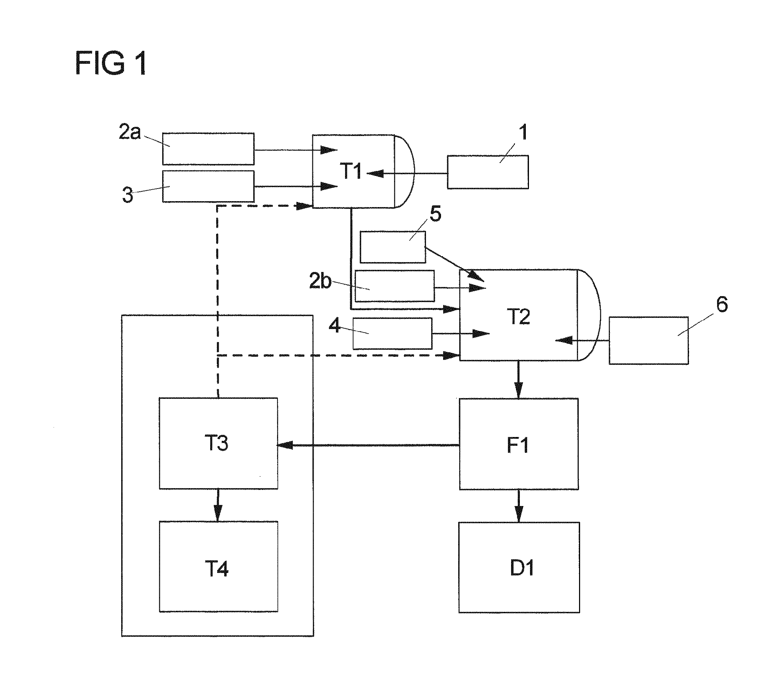

Figure 1 shows a reaction scheme for a first embodiment of the present multistep process. The process is being carried out in a plant comprising a first vessel T1, a second vessel T2, a filtration unit F1 and a drying unit D1.

Step a): The production process starts by loading the first vessel T1 with hot water 1 having preferably a temperature of about 80°C. An aqueous solution of urea as first amino compound 2a is subsequently added to the first vessel T1 followed by the controlled addition of nitric acid 3. The suspension obtained in vessel T1 is subsequently stirred for about 30 min in order to guarantee a complete protonation of urea as first amino compound 2a.

Step b): In parallel the second vessel T2 is loaded at first with hot water 4 and at second with clay, bentonite or montmorillonite particles as inorganic particles 5. The inorganic particle suspension is agitated for further 30 min and heated to a temperature of 80°C in order to guarantee a sufficient swelling of the inorganic particle such that the distance between the particle layers is increased.

Step c1): The suspension of vessel T1, which contains the protonated urea as first amino compound, is transferred from vessel T1 to vessel T2 in a controlled manner. In particular, the urea solution is continuously added to the inorganic particle suspension in vessel T2 within 10 min with a flow rate of 3 kg/min. By doing so the viscosity of the reaction mixture does not exceed 7000 mPas. The mixture of protonated urea and inorganic particles is further agitated for 50 min in order to ensure an almost complete cation exchange of the protonated urea in the inorganic particles.

Step c2): Melamine as second non-protonated amino compound 2b is added to the second vessel T2 containing the mixed suspension of inorganic particles 5 and first amino compound 2a before formaldehyde 6 in step d) is added. This second amino compound 2b differs from the first amino compound 2a added to the first vessel T1 in that the second amino compound 2b is uncharged and can thus not serve for cation exchange within the layered particles 5 but is rather intercalated into the layered particles.

Step d): Subsequently, formaldehyde 6 as preferred aldehyde is added to the mixture of inorganic particles intercalated with protonated urea and non-protonated melamine. The formaldehyde addition is carried out in a continuous manner over a time period of 60 min. The reaction mixture is further agitated for 120 min in order to guarantee an almost complete condensation reaction of melamine and formaldehyde.

Step e): The reaction mixture of vessel T2 is subsequently transferred to filtration unit F1 wherein 12 filtration steps are carried out. The filtered modified inorganic particles are then sent to the drying unit D1, which may be a Turbo-rotor system, which leads to a dry and also grinded product. The drying is done using hot air having an inlet temperature of 250°C and an outlet temperature of 150°C. The residence time of the product in the dryer is lower than 1 sec due to the continuous mode of operation.

Subsequent to the filtration step the waste water is transferred from the filtration unit F1 to the tanks T3 and T4, which serve for waste water regeneration. The water can here either undergo distillation for later recycle and reuse or the water may be used as so called settler, wherein the clear water phase may be reused again. This reduces the amount of waste water which has to be discarded drastically.

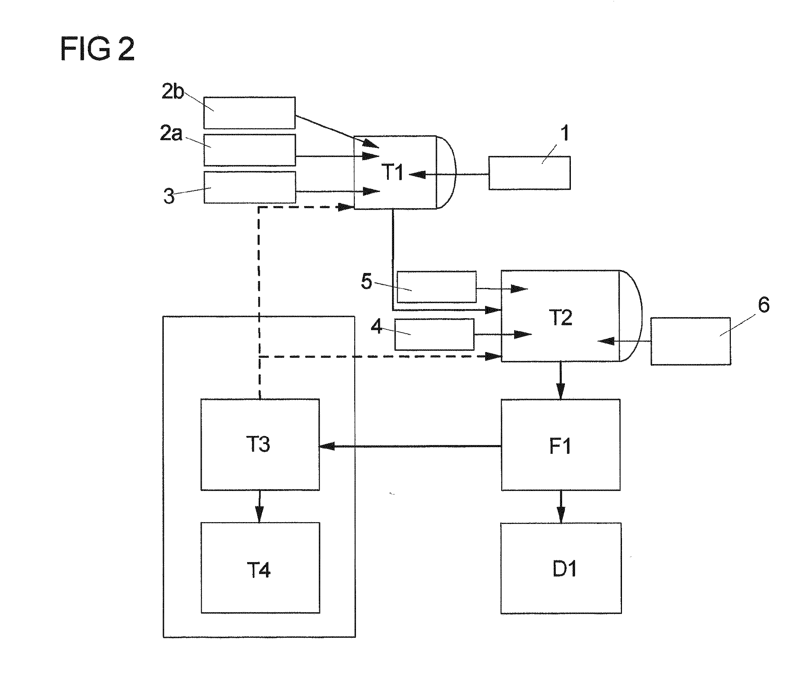

Figure 2 shows a second embodiment of the present process. The process scheme is basically identical to the previously described embodiment of figure 1 so that reference can be made to the previous description.

Step a1): The production process starts by loading the first vessel T1 with hot water 1 having preferably a temperature of about 80°C. An aqueous suspension of melamine as first amino compound 2a is subsequently added to the first vessel T1 followed by the controlled addition of nitric acid 3. The suspension obtained in vessel T1 is subsequently stirred for about 30 min in order to guarantee a complete protonation of the melamine as first amino compound.

Step a2): In deviation from the process variant of Figure 1 melamine as second non-protonated amino compound 2b is added to the protonated melamine in vessel T1.

Step b): In parallel the second vessel T2 is loaded at first with hot water 4 and at second with clay, bentonite or montmorillonite particles as inorganic particles 5. The inorganic particle suspension is agitated for further 30 min and heated to a temperature of 80°C in order to guarantee a sufficient swelling of the inorganic particle such that the distance between the particle layers is increased.

Step c1): The suspension of vessel T1, which contains the protonated melamine as first amino compound and melamine as non-protonated second amino compound, is transferred from vessel T1 to vessel T2 in a controlled manner. In particular, the melamine suspension is continuously added to the inorganic particle suspension in vessel T2 within 10 min with a flow rate of 1 kg/min.

Step d): Subsequently, formaldehyde 6 as preferred aldehyde is added to the mixture of inorganic particles intercalated with protonated melamine and non-protonated melamine. The formaldehyde addition is carried out in a continuous manner over a time period of 60 min. The reaction mixture is further agitated for 120 min.

Step e): The reaction mixture of vessel T2 is subsequently transferred to filtration unit F1 wherein 12 filtration steps are carried out. The filtered modified inorganic particles are then sent to the drying unit D1, which may be a Turbo-rotor system, which leads to a dry and also grinded product. The drying is done using hot air having an inlet temperature of 250°C and an outlet temperature of 150°C. The residence time of the product in the dryer is lower than 1 sec due to the continuous mode of operation.

In a further embodiment, which is basically identical to the first embodiment of figure 1, the amount of aldehyde added to the suspension of protonated first amino compound, non-protonated second amino compound and layered inorganic particles is increased.

By increasing the amount of aldehyde added to the suspension of inorganic particles intercalated with amino compounds, in particular the formaldehyde amount, an improved particle formation is possible. Furthermore, the filtration time can be shortened as well as the drying step which usually depends on the water retention value.

In an even further embodiment, which is basically identical to the first embodiment shown in figure 1, the suspension of layered inorganic particles in second vessel T2 is heated to 100°C instead only to 80 °C as in the first embodiment. By increasing the temperature of the inorganic particle suspension before adding the protonated first amino compound, the overall reaction time can be reduced as well as the filtration time.

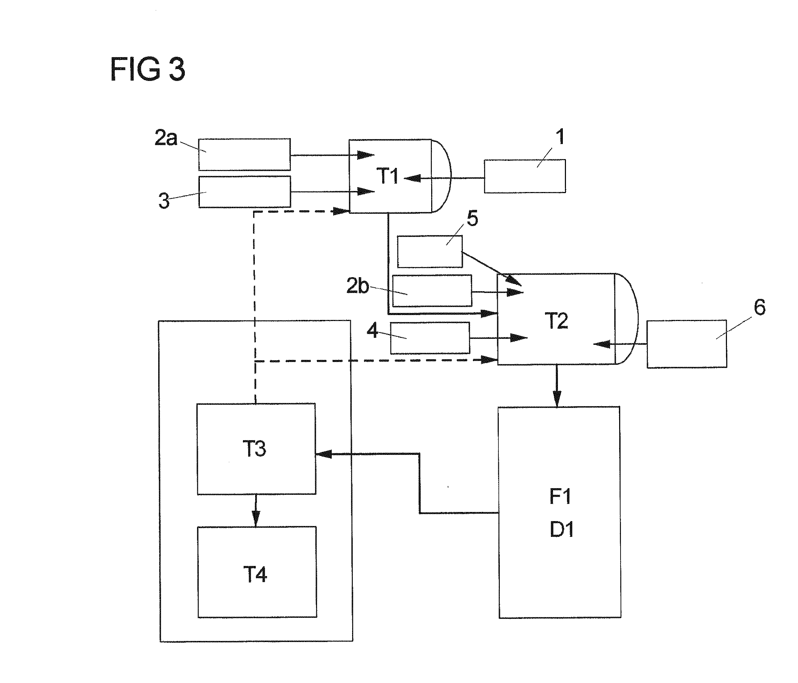

Figure 3 shows a further embodiment of the present process. The process scheme is basically identical to the previously described embodiment of figure 1 so that reference can be made to the previous description.

In addition to the first embodiment shown in figure 1 the filtration unit F1 and drying unit D1 are combined. This allows for a reduction in work up time and conditioning of the modified inorganic particles. Hereby, the suspension is directly dried with a Turbo rotor system.

### Example 1:

Mixture 1: In a 100-I vessel with 57 I deionized water 4.85kg Ceratofix XXMG are added stepwise and heated to 80°C. After achieving the temperature the slurry is stirred for 30min at 1100 rpm. The viscosity is approximately 6200 mPa*s. The pH value is at 9.5.

Mixture 2: In a second 50-I-vessel 19 I deionized water are heated to 50°C. Now, 6.5kg melamine (1.65 kg for formation of protonated form and 4.85 kg for non-protonated form for intercalation into layered silicate) are added stepwise. While heating to 80°C 1.26kg nitric acid (65%) is slowly added and subsequently stirred for 30 min at 1100 rpm. The formed salt formed a suspension and has a pH value of 5.2.

Now the hot Mixture 2 is stepwise added to the Mixture 1 in a way, that the viscosity stays at the same level as Mixture 1 had before. During the ion exchange in the silicate the viscosity drops down. During the next 60 min 2.41 kg of 36.5% formalin solution are added under strong agitating (1100 rpm). This mixture is stirred for 2 h for final condensation to form particles.

The mixture is now filtered and the wet product pre-dried at air and then at 70°C for at least 24h up to a moisture content of 3.1 mass-% (determined at a sample of 3g after 2h drying at 103°C). The final product is grinded with a lab mill. 10.5 kg of product is isolated, which is a yield of 85%. The ash content after 2h at 720°C is 38.0 mass-%. The pH value of a 10% suspension in water is 5.7 at 25°C.

### Example 2

Mixture 1: In a 2.5-I flask with 1480ml deionized water 120g Ceratofix XXMG are added stepwise and heated to 80°C. After achieving the temperature the slurry is stirred for 30min at 1100 rpm. The viscosity is approximately 6200 mPa*s. The pH value is at 9.5.

Mixture 2: In a second 1-I-flask 500ml deionized water are heated to 50°C. Now, 62.9 g o-tolyl biguanide are added stepwise. While heating to 80°C 31.3 g nitric acid (65%) is slowly added and subsequently stirred for 30 min at 1100 rpm. The formed salt is completely soluble and the solution has a pH value of 3.2.

Now the hot Mixture 2 is stepwise added to the Mixture 1 in a way, that the viscosity stays at the same level as Mixture 1 had before. During the ion exchange in the silicate the viscosity drops down. After viscosity reduction lower than 250 mPa*s, 120g of melamine are added and additional 30 min stirred. During the next 60 min 58.7 g of 36.5% formalin solution are added under strong agitating (1100 rpm). This mixture is stirred for 2 h for final condensation to form particles.

The mixture is now filtered and the wet product pre-dried at air and then at 70°C for at least 24h up to a moisture content of 2.4 mass-% (determined at a sample of 3g after 2h drying at 103°C). The final product is grinded with a lab mill. 209 g of product is isolated, which is a yield of 72%. The ash content after 2h at 720°C is 38.3 mass-%. The pH value of a 10% suspension in water is 7.5 at 25°C.

### Example 3

Mixture 1: In a 2.5-I flask with 1480ml deionized water 120g Ceratofix XXMG are added stepwise and heated to 80°C. After achieving the temperature the slurry is stirred for 30min at 1100 rpm. The viscosity is approximately 6200 mPa*s. The pH value is at 9.5.

Mixture 2: In a second 1-I-flask 500ml deionized water are heated to 50°C. Now, 41.2g acetoguanamine are added stepwise. While heating to 80°C 31.3 g nitric acid (65%) is slowly added and subsequently stirred for 30 min at 1100 rpm. The formed salt is completely soluble and the solution has a pH value of 2.5.

Now the hot Mixture 2 is stepwise added to the Mixture 1 in a way, that the viscosity stays at the same level as Mixture 1 had before. During the ion exchange in the silicate the viscosity drops down. After viscosity reduction lower than 250 mPa*s, 120g of melamine are added and additional 30 min stirred. During the next 60 min 58.7 g of 36.5% formalin solution are added under strong agitating (1100 rpm). This mixture is stirred for 2 h for final condensation to form particles.

The mixture is now filtered and the wet product pre-dried at air and then at 70°C for at least 24h up to a moisture content of 2.5 mass-% (determined at a sample of 3g after 2h drying at 103°C). The final product is grinded with a lab mill. 247 g of product is isolated, which is a yield of 83%. The ash content after 2h at 720°C is 34.4 mass-%. The pH value of a 10% suspension in water is 5.3 at 25°C.

### Example 4

Mixture 1: In a 2.5-I flask with 1480ml deionized water 120g Ceratofix XXMG are added stepwise and heated to 80°C. After achieving the temperature the slurry is stirred for 30min at 1100 rpm. The viscosity is approximately 6200 mPa*s. The pH value is at 9.5.

Mixture 2: In a second 1-I-flask 500ml deionized water are heated to 50°C. Now, 28.4g morpholine are added stepwise. While heating to 80°C 31.3 g nitric acid (65%) is slowly added and subsequently stirred for 30 min at 1100 rpm. The formed salt is completely soluble and the solution has a pH value of 2.5.

Now the hot Mixture 2 is stepwise added to the Mixture 1 in a way, that the viscosity stays at the same level as Mixture 1 had before. During the ion exchange in the silicate the viscosity drops down. After viscosity reduction lower than 250 mPa*s, 120g of melamine are added and additional 30 min stirred. During the next 60 min 58.7 g of 36.5% formalin solution are added under strong agitating (1100 rpm). This mixture is stirred for 2 h for final condensation to form particles.

The mixture is now filtered and the wet product pre-dried at air and then at 70°C for at least 24h up to a moisture content of 0.8 mass-% (determined at a sample of 3g after 2h drying at 103°C). The final product is grinded with a lab mill. 227 g of product is isolated, which is a yield of 81%. The ash content after 2h at 720°C is 38.7 mass-%. The pH value of a 10% suspension in water is 6.7 at 25°C.

### Example 5

Mixture 1: In a 2.5-I flask with 1480ml deionized water 120g Ceratofix XXMG are added stepwise and heated to 80°C. After achieving the temperature the slurry is stirred for 30min at 1100 rpm. The viscosity is approximately 6200 mPa*s. The pH value is at 9.5.

Mixture 2: In a second 1-I-flask 500ml deionized water are heated to 50°C. Now, 61.7g triisopropanolamine are added stepwise. While heating to 80°C 31.3 g nitric acid (65%) is slowly added and subsequently stirred for 30 min at 1100 rpm. The formed salt is completely soluble and the solution has a pH value of 2.4.

Now the hot Mixture 2 is stepwise added to the Mixture 1 in a way, that the viscosity stays at the same level as Mixture 1 had before. During the ion exchange in the silicate the viscosity drops down. After viscosity reduction lower than 250 mPa*s, 120g of melamine are added and additional 30 min stirred. During the next 60 min 58.7 g of 36.5% formalin solution are added under strong agitating (1100 rpm). This mixture is stirred for 2 h for final condensation to form particles.

The mixture is now filtered and the wet product pre-dried at air and then at 70°C for at least 24h up to a moisture content of 1.2 mass-% (determined at a sample of 3g after 2h drying at 103°C). The final product is grinded with a lab mill. 241 g of product is isolated, which is a yield of 81%. The ash content after 2h at 720°C is 36.9 mass-%. The pH value of a 10% suspension in water is 7.7 at 25°C.

### Example 6

Mixture 1: In a 2.5-I flask with 1480ml deionized water 120g Ceratofix XXMG are added stepwise and heated to 80°C. After achieving the temperature the slurry is stirred for 30min at 1100 rpm. The viscosity is approximately 6200 mPa*s. The pH value is at 9.5.

Mixture 2: In a second 1-I-flask 500ml deionized water are heated to 50°C. Now, 19.4g urea are added stepwise. While heating to 80°C 31.3 g nitric acid (65%) is slowly added and subsequently stirred for 30 min at 1100 rpm. The formed salt is completely soluble and the solution has a pH value of 0.4.

Now the hot Mixture 2 is stepwise added to the Mixture 1 in a way, that the viscosity stays at the same level as Mixture 1 had before. During the ion exchange in the silicate the viscosity drops down. After viscosity reduction lower than 250 mPa*s, 120g of melamine are added and additional 30 min stirred. During the next 60 min 58.7 g of 36.5% formalin solution are added under strong agitating (1100 rpm). This mixture is stirred for 2 h for final condensation to form particles.

The mixture is now filtered and the wet product pre-dried at air and then at 70°C for at least 24h up to a moisture content of 3.5 mass-% (determined at a sample of 3g after 2h drying at 103°C). The final product is grinded with a lab mill. 237 g of product is isolated, which is a yield of 78%. The ash content after 2h at 720°C is 35.5 mass-%. The pH value of a 10% suspension in water is 5.1 at 25°C.

### Example 7

Mixture 1: In a 2.5-I flask with 1480ml deionized water 120g Ceratofix XXMG are added stepwise and heated to 80°C. After achieving the temperature the slurry is stirred for 30min at 1100 rpm. The viscosity is approximately 6200 mPa*s. The pH value is at 9.5.

Mixture 2: In a second 1-I-flask 500ml deionized water are heated to 50°C. Now, 40.7g melamine are added stepwise. While heating to 80°C 31.3 g nitric acid (65%) is slowly added and subsequently stirred for 30 min at 1100 rpm. The formed salt formed a suspension and has a pH value of 3.2.

Now the hot Mixture 2 is stepwise added to the Mixture 1 in a way, that the viscosity stays at the same level as Mixture 1 had before. During the ion exchange in the silicate the viscosity drops down. After viscosity reduction lower than 250 mPa*s, 120g of melamine are added and additional 30 min stirred. During the next 60 min 58.7 g of 36.5% formalin solution are added under strong agitating (1100 rpm). This mixture is stirred for 2 h for final condensation to form particles.

The mixture is now filtered and the wet product pre-dried at air and then at 70°C for at least 24h up to a moisture content of 3.1 mass-% (determined at a sample of 3g after 2h drying at 103°C). The final product is grinded with a lab mill. 249 g of product is isolated, which is a yield of 81%. The ash content after 2h at 720°C is 38.0 mass-%. The pH value of a 10% suspension in water is 5.7 at 25°C.

### Example 8

Mixture 1: In a 2.5-I flask with 1480ml deionized water 120g Ceratofix XXMG are added stepwise and heated to 80°C. After achieving the temperature the slurry is stirred for 30min at 1100 rpm. The viscosity is approximately 6200 mPa*s. The pH value is at 9.5.

Mixture 2: In a second 1-I-flask 500ml deionized water are heated to 50°C. Now, 65.6g laurylamide (98%) are added stepwise. While heating to 80°C 31.3 g nitric acid (65%) is slowly added and subsequently stirred for 30 min at 1100 rpm. The formed salt is more or less soluble and the solution has a pH value of 0.8.

Now the hot Mixture 2 is stepwise added to the Mixture 1 in a way, that the viscosity stays at the same level as Mixture 1 had before. During the ion exchange in the silicate the viscosity drops down. After viscosity reduction lower than 250 mPa*s, 120g of melamine are added and additional 30 min stirred. During the next 60 min 58.7 g of 36.5% formalin solution are added under strong agitating (1100 rpm). This mixture is stirred for 2 h for final condensation to form particles.

The mixture is now filtered and the wet product pre-dried at air and then at 70°C for at least 24h up to a moisture content of 1.3 mass-% (determined at a sample of 3g after 2h drying at 103°C). The final product is grinded with a lab mill. 280 g of product is isolated, which is a yield of 86%. The ash content after 2h at 720°C is 32.3 mass-%. The pH value of a 10% suspension in water is 5.8 at 25°C.

### Example 9

Mixture 1: In a 2.5-I flask with 1480ml deionized water 120g Ceratofix XXMG are added stepwise and heated to 80°C. After achieving the temperature the slurry is stirred for 30min at 1100 rpm. The viscosity is approximately 6200 mPa*s. The pH value is at 9.5.

Mixture 2: In a second 1-I-flask 500ml deionized water are heated to 50°C. Now, 117.6g Ethoquad C12 nitrate are added stepwise. The solution is heated to 80°C and subsequently stirred for 30 min at 1100 rpm. The solution has a pH value of 7.0.

Now the hot Mixture 2 is stepwise added to the Mixture 1 in a way, that the viscosity stays at the same level as Mixture 1 had before. During the ion exchange in the silicate the viscosity drops down. After viscosity reduction lower than 250 mPa*s, 120g of melamine are added and additional 30 min stirred. During the next 60 min 58.7 g of 36.5% formalin solution are added under strong agitating (1100 rpm). This mixture is stirred for 2 h for final condensation to form particles.

The mixture is now filtered and the wet product pre-dried at air and then at 70°C for at least 24h up to a moisture content of 0.5 mass-% (determined at a sample of 3g after 2h drying at 103°C). The final product is grinded with a lab mill. 270 g of product is isolated, which is a yield of 72%. The ash content after 2h at 720°C is 42.7 mass-%. The pH value of a 10% suspension in water is 9.2 at 25°C.

### Example 10

Mixture 1: In a 2.5-I flask with 1480ml deionized water 120g Ceratofix XXMG are added stepwise and heated to 80°C. After achieving the temperature the slurry is stirred for 30min at 1100 rpm. The viscosity is approximately 6200 mPa*s. The pH value is at 9.5.

Mixture 2: In a second 1-I-flask 500ml deionized water are heated to 50°C. Now, 19.4g urea are added stepwise. While heating to 80°C 31.3 g nitric acid (65%) is slowly added and subsequently stirred for 30 min at 1100 rpm. The formed salt is completely soluble and the solution has a pH value of 0.4.

Now the hot Mixture 2 is stepwise added to the Mixture 1 in a way, that the viscosity stays at the same level as Mixture 1 had before. During the ion exchange in the silicate the viscosity drops down. After viscosity reduction lower than 250 mPa*s, 96g of melamine and 24g urea are added and additional 30 min stirred. During the next 60 min 58.7 g of 36.5% formalin solution are added under strong agitating (1100 rpm). This mixture is stirred for 2 h for final condensation to form particles.

The mixture is now filtered and the wet product pre-dried at air and then at 70°C for at least 24h up to a moisture content of 0.6 mass-% (determined at a sample of 3g after 2h drying at 103°C). The final product is grinded with a lab mill. 226 g of product is isolated, which is a yield of 79%. The ash content after 2h at 720 °C is 40.8 mass-%. The pH value of a 10% suspension in water is 5.6 at 25°C.

### Example 11

Mixture 1: In a 4-I flask with 1480ml deionized water 120g Ceratofix XXMG are added stepwise and heated to 80°C. After achieving the temperature the slurry is stirred for 30min at 1100 rpm. The viscosity is approximately 6200 mPa*s. The pH value is at 9.5.

Mixture 2: In a second 1.5-I-flask 500ml deionized water are heated to 50°C. Now, 40.7g melamine are added stepwise. While heating to 80°C 440.9 g sulphurous acid (6%) is slowly added and subsequently stirred for 30 min at 1100 rpm. The formed salt formed a suspension and has a pH value of 3.9.

Now the hot Mixture 2 is stepwise added to the Mixture 1 in a way, that the viscosity stays at the same level as Mixture 1 had before. During the ion exchange in the silicate the viscosity drops down. After viscosity reduction lower than 250 mPa*s, 120g of melamine are added and additional 30 min stirred. During the next 60 min 58.7 g of 36.5% formalin solution are added under strong agitating (1100 rpm). This mixture is stirred for 2 h for final condensation to form particles.

The mixture is now filtered and the wet product pre-dried at air and then at 70°C for at least 24h up to a moisture content of 2.7 mass-% (determined at a sample of 3g after 2h drying at 103°C). The final product is grinded with a lab mill. 237 g of product is isolated, which is a yield of 81%. The ash content after 2h at 720°C is 39.1 mass-%. The pH value of a 10% suspension in water is 5.9 at 25°C.

### Example 12

Mixture 1: In a 2.5-I flask with 1480ml deionized water 120g Ceratofix XXMG are added stepwise and heated to 80°C. After achieving the temperature the slurry is stirred for 30min at 1100 rpm. The viscosity is approximately 6200 mPa*s. The pH value is at 9.5.

Mixture 2: In a second 1-I-flask 500ml deionized water are heated to 50°C. Now, 40.7g melamine are added stepwise. While heating to 80°C 12.4 g phosphoric acid (85%) is slowly added and subsequently stirred for 30 min at 1100 rpm. The formed salt formed a suspension and has a pH value of 5.5.

Now the hot Mixture 2 is stepwise added to the Mixture 1 in a way, that the viscosity stays at the same level as Mixture 1 had before. During the ion exchange in the silicate the viscosity drops down. After viscosity reduction lower than 250 mPa*s, 120g of melamine are added and additional 30 min stirred. During the next 60 min 58.7 g of 36.5% formalin solution are added under strong agitating (1100 rpm). This mixture is stirred for 2 h for final condensation to form particles.

The mixture is now filtered and the wet product pre-dried at air and then at 70°C for at least 24h up to a moisture content of 0.9 mass-% (determined at a sample of 3g after 2h drying at 103°C). The final product is grinded with a lab mill. 255 g of product is isolated, which is a yield of 87%. The ash content after 2h at 720°C is 36.4 mass-%. The pH value of a 10% suspension in water is 7.1 at 25°C.

### Example 13

Mixture 1: In a 2.5-I flask with 1480ml deionized water 120g Ceratofix XXMG are added stepwise and heated to 80°C. After achieving the temperature the slurry is stirred for 30min at 1100 rpm. The viscosity is approximately 6200 mPa*s. The pH value is at 9.5.

Mixture 2: In a second 1-I-flask 500ml deionized water are heated to 50°C. Now, 40.7g melamine are added stepwise. While heating to 80°C 47.6 g adipic acid is slowly added and subsequently stirred for 30 min at 1100 rpm. The formed salt formed a suspension and has a pH value of 4.9.

Now the hot Mixture 2 is stepwise added to the Mixture 1 in a way, that the viscosity stays at the same level as Mixture 1 had before. During the ion exchange in the silicate the viscosity drops down. After viscosity reduction lower than 250 mPa*s, 120g of melamine are added and additional 30 min stirred. During the next 60 min 58.7 g of 36.5% formalin solution are added under strong agitating (1100 rpm). This mixture is stirred for 2 h for final condensation to form particles.

The mixture is now filtered and the wet product pre-dried at air and then at 70°C for at least 24h up to a moisture content of 2.3 mass-% (determined at a sample of 3g after 2h drying at 103°C). The final product is grinded with a lab mill. 265 g of product is isolated, which is a yield of 90%. The ash content after 2h at 720°C is 34.0 mass-%. The pH value of a 10% suspension in water is 5.9 at 25°C.

### Example 14

Mixture 1: In a 2.5-I flask with 1480ml deionized water 120g Ceratofix XXMG are added stepwise and heated to 80°C. After achieving the temperature the slurry is stirred for 30min at 1100 rpm. The viscosity is approximately 6200 mPa*s. The pH value is at 9.5.

Mixture 2: In a second 1-I-flask 500ml deionized water are heated to 50°C. Now, 40.7g melamine are added stepwise. While heating to 80°C 61.3 g toluene sulfonic acid is slowly added and subsequently stirred for 30 min at 1100 rpm. The formed salt formed a suspension and has a pH value of 3.6.

Now the hot Mixture 2 is stepwise added to the Mixture 1 in a way, that the viscosity stays at the same level as Mixture 1 had before. During the ion exchange in the silicate the viscosity drops down. After viscosity reduction lower than 250 mPa*s, 120g of melamine are added and additional 30 min stirred. During the next 60 min 58.7 g of 36.5% formalin solution are added under strong agitating (1100 rpm). This mixture is stirred for 2 h for final condensation to form particles.

The mixture is now filtered and the wet product pre-dried at air and then at 70°C for at least 24h up to a moisture content of 2.6 mass-% (determined at a sample of 3g after 2h drying at 103°C). The final product is grinded with a lab mill. 252 g of product is isolated, which is a yield of 86%. The ash content after 2h at 720°C is 36.6 mass-%. The pH value of a 10% suspension in water is 6.1 at 25°C.

### Example 15

Mixture 1: In a 2.5-I flask with 1480ml deionized water 120g Ceratofix XXMG are added stepwise and heated to 80°C. After achieving the temperature the slurry is stirred for 30min at 1100 rpm. The viscosity is approximately 6200 mPa*s. The pH value is at 9.5.

Mixture 2: In a second 1-I-flask 500ml deionized water are heated to 50°C. Now, 40.7g melamine are added stepwise. While heating to 80°C 31.3 g nitric acid (65%) is slowly added and subsequently stirred for 30 min at 1100 rpm. The formed salt formed a suspension and has a pH value of 3.2.

Now the hot Mixture 2 is stepwise added to the Mixture 1 in a way, that the viscosity stays at the same level as Mixture 1 had before. During the ion exchange in the silicate the viscosity drops down. After viscosity reduction lower than 250 mPa*s, 120g of melamine are added and additional 30 min stirred. During the next 60 min a mixture of 29.4 g of 36.5% formalin solution and 71.5g of 25% glutaraldehyde solution are added under strong agitating (1100 rpm). This mixture is stirred for 2 h for final condensation to form particles.

The mixture is now filtered and the wet product pre-dried at air and then at 70°C for at least 24h up to a moisture content of 0.8 mass-% (determined at a sample of 3g after 2h drying at 103°C). The final product is grinded with a lab mill. 244 g of product is isolated, which is a yield of 79%. The ash content after 2h at 720°C is 38.7 mass-%. The pH value of a 10% suspension in water is 5.8 at 25°C.

### Example 16

Mixture 1: In a 2.5-I flask with 1480ml deionized water 120g Ceratofix XXMG are added stepwise and heated to 80°C. After achieving the temperature the slurry is stirred for 30min at 1100 rpm. The viscosity is approximately 6200 mPa*s. The pH value is at 9.5.

Mixture 2: In a second 1-I-flask 500ml deionized water are heated to 50°C. Now, 40.7g melamine are added stepwise. While heating to 80°C 31.3 g nitric acid (65%) is slowly added and subsequently stirred for 30 min at 1100 rpm. The formed salt formed a suspension and has a pH value of 3.2.

Now the hot Mixture 2 is stepwise added to the Mixture 1 in a way, that the viscosity stays at the same level as Mixture 1 had before. During the ion exchange in the silicate the viscosity drops down. After viscosity reduction lower than 250 mPa*s, 120g of melamine are added and additional 30 min stirred. During the next 60 min a mixture of 142.9 g of 25% glutaraldehyde solution are added under strong agitating (1100 rpm). This mixture is stirred for 2 h for final condensation to form particles.

The mixture is now filtered and the wet product pre-dried at air and then at 70°C for at least 24h up to a moisture content of 0.7 mass-% (determined at a sample of 3g after 2h drying at 103°C). The final product is grinded with a lab mill. 246 g of product is isolated, which is a yield of 78%. The ash content after 2h at 720°C is 37 mass-%. The pH value of a 10% suspension in water is 5.9 at 25°C.

### Example 17

Mixture 1: In a 2.5-I flask with 1480ml deionized water 120g Ceratofix XXMG are added stepwise and heated to 80°C. After achieving the temperature the slurry is stirred for 30min at 1100 rpm. The viscosity is approximately 6200 mPa*s. The pH value is at 9.5.

Mixture 2: In a second 1-I-flask 500ml deionized water are heated to 50°C. Now, 19.4g urea are added stepwise. While heating to 80°C 31.3 g nitric acid (65%) is slowly added and subsequently stirred for 30 min at 1100 rpm. The formed salt is completely soluble and the solution has a pH value of 0.4.

Now the hot Mixture 2 is stepwise added to the Mixture 1 in a way, that the viscosity stays at the same level as Mixture 1 had before. During the ion exchange in the silicate the viscosity drops down. After viscosity reduction lower than 250 mPa*s, 120g of melamine are added and additional 30 min stirred. During the next 60 min 117.4 g of 36.5% formalin solution are added under strong agitating (1100 rpm). This mixture is stirred for 2 h for final condensation to form particles.

The mixture is now filtered and the wet product pre-dried at air and then at 70°C for at least 24h up to a moisture content of 2.5 mass-% (determined at a sample of 3g after 2h drying at 103°C). The final product is grinded with a lab mill. 245 g of product is isolated, which is a yield of 81%. The ash content after 2h at 720°C is 34.8 mass-%. The pH value of a 10% suspension in water is 5.2 at 25°C.

### Example 18

Commercially available urea-formaldehyde-(UF) glues with a formaldehyde: urea ratio of ≤ 1.12 are considered. The composition of a glue for production of particle boards e. g. additives, hydrophobic agent, curing agent etc. remains, comparing to industrial compositions, standard as well as dilution of a glue paste with water to 50 %. Modified inorganic particles as aldehyde scavenger are added to the glue simultaneously with other additives. The curing agent is added to the glue paste prior to spraying of a glue paste on the wood chips. The amount of scavenger is calculated in % of solid material on solids of glue which is app. 697 %.

Considering this approach, 18,2 g of a modified inorganic particle (obtained according to Example 1 to 18 with moisture bellow 1 %), i.e. 6 % regarding the total solid content of a glue, is dispersed in 100.7 g water. 434,8 g of urea-formaldehyde glue, 25.0 g of hydrophobic agent in a 60 % emulsion (this corresponds to 0.5 wt% of hydrophobic agent regarding the total mass of the particle board) are mixed and homogenised with the melamine-clay particles. 6.0 g ammonium nitrate in a 50 % solution (this corresponds to 1.0 wt% of hardener regarding the total solid content of a glue) as curing agent is added.

3061 g of wood chips (core chips, max length app. 3 cm, humidity lower than 4%) are mixed in a rotating drum. With the help of a pump injection 584.7 g of the glue paste is sprayed on the wood chips. 1.4 kg of the so prepared wood chips are put in a wooden form of 460 x 440 mm and pressed to a single layer particle board (PB) with 10 mm thickness and a density of 700 kg/m³. Pressing temperature is 200°C and pressing time is 80 sec. Formaldehyde release from PB is further on determined according to the EN 717-3 Flask method. From manufactured PB test pieces of 25 mm x 25 mm are cut for determination of flask value, 12 test pieces are taken for determination of the moisture content. The formaldehyde release from the boards with the different Examples (No.1 to 17) is shown below in Table 1.

### Comparative example 18.1

434.8 g of urea-formaldehyde glue, 25.0 g of hydrophobic agent emulsion, 99.2 g of water and 6.0 g ammonium nitrate as curing agent are mixed together and homogenised.

Using this glue paste wood chips were glued and a particle board was pressed under the same conditions as in Example 18.

| ***Modified inorganic particle*** | ***Gel time (s) of activated glue at 100°C*** | ***Formaldehyde release (ppm) from particle board*** |
|---|---|---|
| Example 1 | 302 | 7.6 |
| Example 2 | 460 | 9.1 |
| Example 3 | 501 | 9.8 |
| Example 4 | 430 | 8.6 |
| Example 5 | 387 | 9.5 |
| Example 6 | 246 | 6.3 |
| Example 7 | 290 | 7.2 |
| Example 8 | 340 | 8.8 |
| Example 9 | 411 | 10.1 |
| Example 10 | 320 | 9.3 |
| Example 11 | 495 | 8.2 |
| Example 12 | 500 | 7.4 |
| Example 13 | 490 | 7.9 |
| Example 14 | 470 | 8.6 |
| Example 15 | 415 | 6.9 |
| Example 16 | 440 | 7.4 |
| Example 17 | 286 | 8.9 |
| Example 18.1 | 257 | 22 |

## Claims

1. Multistep process for obtaining modified inorganic particles having a layered structure,
**characterized by** the steps of
a) Providing an aqueous solution or suspension comprising at least one first amino compound in a first vessel T1 and protonating the at least one first amino compound by using at least one acid;
b) Providing an aqueous homogenous suspension comprising at least one inorganic particle having a layered structure in a second vessel T2;
c1) addition of the aqueous solution or suspension of the at least one first protonated amino compound from the first vessel T1 to the homogenous suspension comprising at least one inorganic particle having a layered structure in the second vessel T2;
c2) Addition of at least one second non-protonated amino compound to the suspension obtained in step c1);
d) Addition of at least one aldehyde to the homogenous suspension of the at least one inorganic particle being modified by the first protonated amino compound and the second non-protonated amino compound in the second vessel T2; and
e) removal and work up of the modified inorganic particles.

2. Multistep process for obtaining modified inorganic particles having a layered structure,
**characterized by** the steps of
a1) Providing an aqueous solution or suspension comprising at least one first amino compound in a first vessel T1 and protonating the at least one first amino compound by using at least one acid;
a2) Addition of at least one non-protonated second amino compound to the solution or suspension obtained in step a1) in the first vessel T1;
b) Providing an aqueous homogeneous suspension comprising at least one inorganic particle having a layered structure in a second vessel T2;
c1) addition of the aqueous solution or suspension from the first vessel T1 comprising the first protonated amino compound and the second non-protonated compound to the homogeneous suspension comprising at least one inorganic particle having a layered structure in the second vessel T2;
d) Addition of at least one aldehyde to the homogenous suspension of the at least one inorganic particle being modified by the first protonated amino compound **and** the second non-protonated amino compound in the second vessel T2; and
e) removal and work up of the modified inorganic particles.

3. Multistep process according to claim 1 or 2, **characterized in that** during the addition of the first amino compound to the water, in process step a) a viscosity between 0.1 to 100 mPas/80°C, preferably 0.2 to 80 mPas/80°C, most preferably 0.2 to 60 mPas/80°C is obtained.

4. Multistep process according to one of the preceding claims, **characterized in that** the acid is added in process step a) within a time range between 2 and 10 min, preferably 3 and 8 min, most preferably 4 and 7 min.

5. Multistep process according to one of the preceding claims, **characterized in that** the inorganic particles having a layered structure are added to the water in process step b) until a final viscosity of the suspension between 3000 to 10.000 mPas/75°, preferably 5000 to 8000 mPas/75°C, most preferably 6000 to 7000 mPas/75°C is reached.

6. Multistep process according to one of the preceding claims, **characterized in that** the addition of the aqueous solution containing the first amino compound from vessel T1 to the aqueous homogeneous suspension of inorganic particles in the second vessel T2 in step c) is carried out with a continuous flow rate of 1 to 10 kg/min, preferably 2 to 8 kg/min, in particular preferably 3 to 6 kg/min, preferably such that the viscosity range in the vessel T2 is kept at value between 3000 to 10.000 mPas/75°, preferably 5000 to 8000 mPas/75°C, most preferably 6000 to 7000 mPas/75°C

7. Multistep process according to one of the preceding claims, **characterized in that** the addition of the aqueous solution containing the first amino compound from vessel T1 to the aqueous homogeneous suspension of inorganic particles in the second vessel T2 in process step c1) is carried out over a time period of 5 to 30 min, preferably 10 to 20 min, preferably such that the viscosity range in the vessel T2 is kept at value between 3000 to 10.000 mPas/75°, preferably 5000 to 8000 mPas/75°C, most preferably 6000 to 7000 mPas/75°C

8. Multistep process according to one of the preceding claims, **characterized in that** the addition of the at least one aldehyde in process step d) occurs over a time period of 30 to 120 min, preferably 40 to 80 min, most preferably 50 to 70 min.

9. Multistep process according to one of the preceding claims, **characterized in that** the reaction mixture obtained in process step d) is further stirred for a time period of 60 min to 240 min, preferably 90 min to 210 min, most preferably 120 min to 180 min at a temperature between 60 and 100°C, preferably 80 and 100°C.

10. Multistep process according to one of the preceding claims, **characterized in that the** modified inorganic particles are filtered and dried, preferably in a combined filtration drying step, after removal from the reaction mixture in process step e).

11. Multistep process according to one of the preceding claims, **characterized in that** a washing step of the modified inorganic particles after removal of the particles from the reaction mixture, in particular after filtration of the reaction mixture, is omitted.

12. Modified inorganic particles having a layered structure obtainable in a multistep process according to one of the preceding claims
**characterized by**
- an interlamellar content of at least one first protonated amino compound, at least one second non-protonated amino compound and at least one anion of the acid used for protonating the first amino compound, and
- a condensate, preferably an oligomer or polymer formed by the reaction of at least one of the first and/or second amino compound with at least one aldehyde, wherein the amino-aldehyde condensate is formed in the outer region of the inorganic particles layers and/or as a coat on the inorganic particle surface,
- wherein the condensate forms a barrier for the interlamellar content of the inorganic particles, such that the interlamellar content, in particular organic content remains within the inorganic particles.

13. Modified inorganic particles according to claim 12, **characterized by** an interlamellar content of at least first protonated amino compound, at least one second non-protonated amino compound and at least anion of the acid used for protonating the first amino compound, wherein the at least one anion is selected from the group comprising nitrate, sulphate, hydrogensulphate, sulphite, phosphate, hydrogenphosphate, dihydrogenphosphate, acetate, oxalate, mono-oxalate, adipate, mono-adipate, toluene sulphonate, wherein nitrate is particularly preferred.

14. Modified inorganic particles according to claim 12 or 13, **characterized by** an interlamellar content of urea as first protonated amino compound, melamine as second non-protonated amino compound, nitrate as counterion for the protonated urea, and melamine-formaldehyde-condensate and melamine-urea-formaldehyde-condensate as barrier for the interlamellar content.

15. Use of the modified inorganic particles according to one of claims 12 to 14 as aldehyde scavenger, as curing agent for different glues, in particular aminoplast-formaldehyde-glues like urea-formaldehyde, melamine-formaldehyde or melamine-urea-formaldehyde glues as modifier for wood based panels and as additives for thermoplastic or thermoset compounds, in particular polyolefines, for improving their general properties.
